# EUROPEAN PATENT APPLICATION

(11) **EP 1 865 495 A1**
(43) Date of publication of application: **12.12.2007**
(21) Application number: 07000566.5
(22) Date of filing: 12.01.2007
(51) Int. Cl.: G10L 13/00, H04N 5/232, H04M 1/725

(54) **Remote control system and method for portable device**

(30) Priority: 07.06.2006 KR 20060050670
(71) Applicant: Samsung Electronics Co., Ltd., Suwon-si Gyeonggi-do (KR)
(72) Inventor: Hwang, Soon-Shik c/o Samsung Electronics Co., Ltd., Suwon-si Gyeonggi-do (KR)
(74) Representative: Lang, Johannes

(57) **Abstract**

A remote control system and method for a portable device combined with a camera module is provided. Wireless remote control of a camera-enabled portable device includes transmitting a control signal from the remote controller to the portable device, extracting, at the portable device, an instruction for controlling the portable device from the control signal, executing the instruction for an operation of the camera, generating a voice message corresponding to the operation, transmitting the voice message from the portable device to the remote controller, and replaying, at the remote controller, the voice message. The remote control system and method for a portable device can be is implemented with a remote control module that is connected to the portable device through a wireless channel, such as Bluetooth, whereby it is possible to remotely control the portable device.

## Description

### BACKGROUND OF THE INVENTION

### Field of the Invention:

The present invention relates to a portable device. More particularly, the present invention relates to a remote control system and method for a portable device combined with a camera module.

### Description of the Related Art:

In recent years, manufacturers have introduced mobile devices with built-in cameras. One such device, referred to as a camera phone, combines a cellular telephone with a camera in a single housing. Consumers may use their camera phones to capture images, exchange digital images, and participate in video teleconferences.

Until recently, the demand for mobile communication devices with built-in cameras has been low because such devices have been large and prohibitively expensive. However, due to advances in technology, the size and cost of these devices have decreased. Accordingly, wireless manufacturers expect the demand for these mobile devices to increase. To meet the growing demand and to stay competitive in the market, manufacturers regularly explore ways to improve these mobile devices.

Although the camera phone is advantageous in that it relieves the burden of carrying a separate camera and communication device, the functionality of the camera phone, when operating as a camera, is limited to capturing an image at a short distance because the camera function should be operated manually with the controls on the camera body. Accordingly, there is a need to expand the functionality of the camera phone, so as to remotely control the various camera functions.

### SUMMARY OF THE INVENTION

The present invention has been made in an effort to address the above problems, and it is an object of exemplary embodiments of the present invention to provide a method and remote control mechanism of a portable device combined with a camera module to remotely control a camera function of the portable device.

It is another object of exemplary embodiments of the present invention to provide a method and remote control mechanism of a portable device combined with a camera module that are capable of remotely controlling camera function of the portable device using a remote control module.

It is still another object of exemplary embodiments of the present invention provide a method and a remote control mechanism of a portable device combined with a camera module that are capable of providing voice notification on execution of an instruction generated by a remote control module.

In accordance with one aspect of exemplary embodiments of the present invention, the above and other objects can be achieved by a method for remotely controlling a camera-enabled portable device communicating with a remote controller. The method comprises transmitting a control signal from the remote controller to the portable device, extracting, at the portable device, an instruction for controlling the portable device from the control signal, executing the instruction for an operation of the camera, generating a voice message corresponding to the operation, transmitting the voice message from the portable device to the remote controller, and replaying, at the remote controller, the voice message.

In accordance with another aspect of exemplary embodiments of the present invention, the above and other objects can be achieved by a system for remotely controlling a camera. The system comprises a portable device combined with the camera, the portable device performing an operation of the camera according to a control signal and generating a voice message for notifying the operation, and a remote controller for generating and transmitting the control signal to the portable device, and receiving and replaying the voice message.

### BRIEF DESCRIPTION OF THE DRAWINGS

The above and other exemplary features and advantages of the present invention will be more apparent from the following detailed description of certain exemplary embodiments thereof when taken in conjunction with the accompanying drawings, in which:
FIG. 1 is a schematic view illustrating a remote control system according to an exemplary embodiment of the present invention;
FIG. 2 is a block diagram illustrating a configuration of a camera phone according to an exemplary embodiment of the present invention;
FIG. 3 is a message flow diagram illustrating a remote control method for a camera phone according to an exemplary embodiment of the present invention; and
FIG. 4 is a flowchart illustrating a remote control method for a camera phone according to an exemplary embodiment of the present invention.

Throughout the drawings, like reference numbers should be understood to refer to like elements, features, and structures.

### DETAILED DESCRIPTION OF EXEMPLARY EMBODIMENTS

The matters exemplified in this description are provided to assist in a comprehensive understanding of various exemplary embodiments of the present invention disclosed with reference to the accompanying figures. Accordingly, those of ordinary skill in the art will recognize that various changes and modifications of the exemplary embodiments described herein can be made without departing from the scope and spirit of the claimed invention. Descriptions of well-known functions and constructions are omitted for clarity and conciseness.

Exemplary embodiments of the present invention are described in conjunction with a camera phone as an example of a portable device combined with a camera module. However, the present invention is not limited to a camera phone, but can be implemented with portable devices such as cellular phones, personal communication service (PCS) phones, dedicated digital multimedia broadcasting (DMB) receivers, smart phones, International Mobile Telecommunication 2000 (IMT-2000) terminals, Universal Mobile Telecommunication Service (UMTS) terminals, laptop computers, personal computers, and the like.

In exemplary embodiments of the present invention, a wireless control module is adopted for controlling a camera phone. The wireless control module can be implemented as a wireless remote controller or a wireless headset. However, the wireless control module is not limited to a wireless implementation, but can be implemented, for example, as a corded earphone or a corded ear set.

Exemplary embodiments of the present invention can be implemented with a Bluetooth-enabled camera phone as a portable device and a Bluetooth-enabled headset as a remote control module.

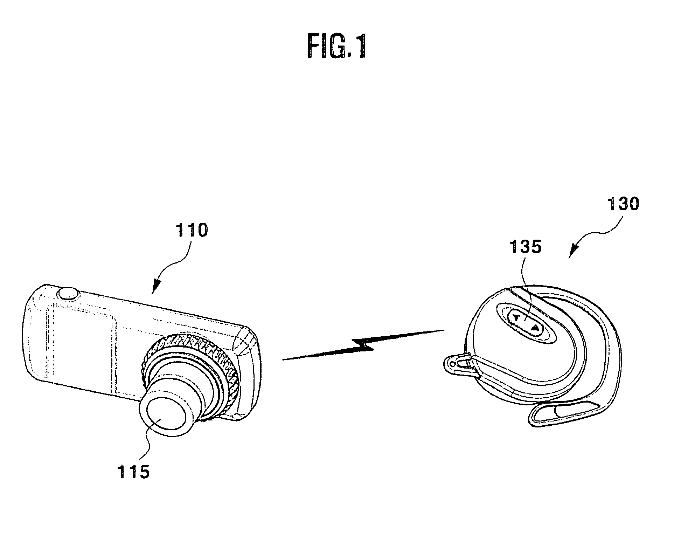

FIG. 1 is a schematic view illustrating a remote control system according to an exemplary embodiment of the present invention.

Referring to FIG. 1, the remote control system according to an exemplary embodiment of the present invention includes a camera phone 110 and a headset 130 that support Bluetooth communication. The camera phone 110 is equipped with a camera module 115 for capturing images, and the headset 130 includes a wireless control module 135. The remote control system may include a holder (not shown) for holding the camera phone 110.

The camera phone 110 supports voice communication, short message service (SMS), multimedia message service, among others. In addition, the camera phone 110 comprises a camera module 115 for taking pictures.

The headset 130 includes a control module 135 having at least one button for controlling operations of the camera module 115.In an exemplary embodiment, the headset 130 comprises a Bluetooth-enabled headset.

Remote control of camera module 115 of the camera phone 110 is activated according to a control signal generated and transmitted by manipulation of the control module 135 of headset 130. The camera phone 110 performs an operation of the camera module 115 corresponding to a control signal transmitted from the headset 130. In addition, the camera phone 110 transmits a voice message corresponding to the operation to be performed according to the control signal to the headset 130. Upon receiving the voice message, the headset replays the voice message to inform the user of the expected operation.

For example, the user can manipulate the buttons of the control module 135 of the headset 130 for activating a camera operation mode after establishing a wireless connection between the camera phone 110 and the headset 130. Upon receiving a control signal for activating the camera operation mode, the camera phone 110 activates the camera operation mode. After activating the camera operation mode, the camera phone 110 retrieves a voice message (for example, "camera operation mode is activated") from a storage (not shown) and transmits the retrieved voice message to the headset 130.

Upon receiving the voice message, the headset 130 outputs the voice message such that the user is informed of the activation of the camera operation mode.

After the camera phone 110 activates the camera operation mode, the user can explore menus for operating the camera module 115 by manipulating the control module 135 of the headset 130. If a menu exploration signal is received from the headset, the camera phone 110 displays menus for operating the camera module 115 and transmits a voice message indicating the activation of the camera operation menus (for example, "Camera operation menus are activated") to the headset 130. Upon receiving the voice message indicating the activation of the camera operation menus, the headset 130 plays the voice message to inform the user of the activation of the camera operation menus.

While the camera operation menus are activated, the user can explore the camera operation menus by manipulating buttons of the control module 135 of the headset 130.

Upon receiving a control signal from the headset 130 for searching an option item, the camera phone 110 moves a cursor across option items, for example, shooting mode entry, flash, zoom, album, upper directory, and the like.

The camera phone 110 transmits a voice message corresponding to the option item on which the cursor is overlaid to the headset 130 such that the headset 130 replays the voice message to notify the current option item to the user.

Referring to the voice messages, the user can select an option item by manipulating the control module 135 of the headset 130.

Upon receiving a control signal for selecting an option item from the control module 135, the camera phone 110 extracts an option item execution instruction from the control signal and executes the instruction, for example, enters a shooting mode or shoots an image.

After execution of the instruction, the camera phone transmits a voice message to the headset 130 notifying of the completion of an operation performed corresponding to the instruction, and the headset 130 replays the voice message to notify of the completion of the operation to the user. For example, if the instruction is to enter the shooting mode and the camera phone 110 enters the shooting mode, the voice message "shooting mode is activated" is transmitted to and replayed by the headset 130. Also, if the instruction is to shoot an image, the camera phone 110 transmits the voice message "an image is captured" to the headset 130.

For user convenience, the image capture can be performed with a simple manipulation of the control module 135 of the headset 130. For example, the shooting instruction is generated by pushing a button of the control module 135 during a certain period.

In this exemplary embodiment, the voice message-based notification is performed with a camera related operation, however the present invention is not limited to the camera related operation, but can also be implemented with other operations of the camera phone.

A structure of the camera phone 110 of FIG. 1 is now described in more detail.

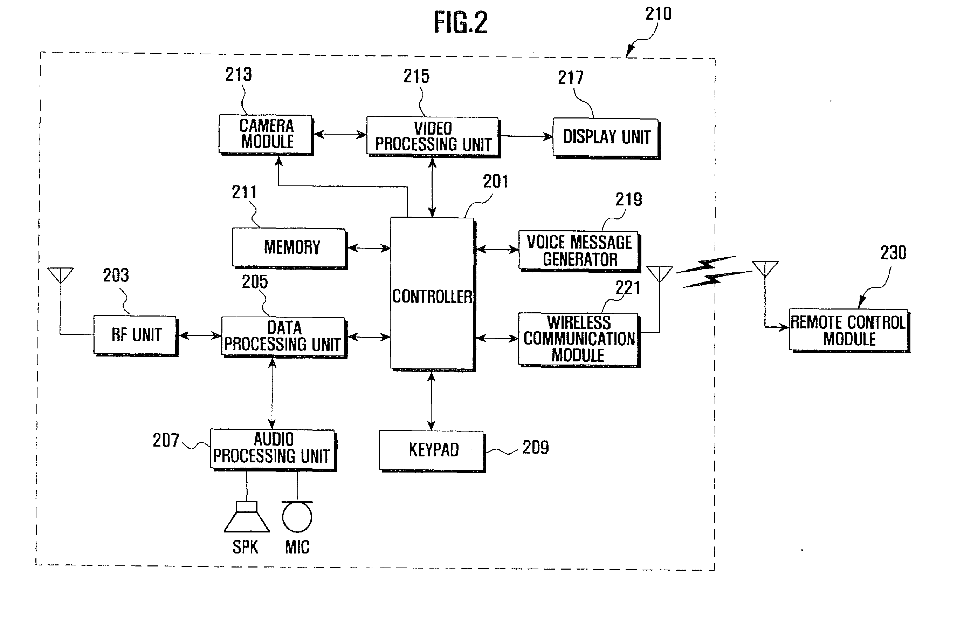

FIG. 2 is a block diagram illustrating a configuration of a camera phone according to an exemplary embodiment of the present invention.

Referring to FIG. 2, the camera phone 210 includes an input means, a processing means, a storage means, an output means, and a communication means.

The input means includes an audio processing unit 207, a keypad 209 for enabling a user to input data, for example, alphanumeric data, and a camera module 213 for taking pictures. A display unit 217 can be provided, and can be implemented as a liquid crystal display (LCD) supporting a touch screen function, such that the display unit 217 can be included in the input means. The input means is responsible for inputting various data such as voice data, alphanumeric data, and video data through the elements constituting the input means.

The processing means includes a video processing unit 215 for processing video signals received through the camera module 213, a data processing unit 205 for processing sound data from the audio processing unit 207 and data input through the keypad 209, a controller 201 for controlling the elements constituting the camera phone 210, a wireless communication module 221 for receiving a control signal and transmitting a voice message notifying of an operation performed corresponding to the control signal through a wireless channel, and a voice message generator 219 for generating a voice message corresponding to the operation performed by the camera module 213. The processing means is responsible for processing data such as voice, alphanumeric, and video data. The processing means further processes data generated according to user instructions and the control signals transmitted from a remote control module 230 (for example, Bluetooth-enabled headset).

The processing means further includes a digital multimedia broadcast (DMB) receiver (not shown) for separating audio and video signals and data signals from received DMB signals, and decoding the signals.

The storage means stores user data such as text documents, pictures taken by the camera module 213, configuration parameters, and voice messages for operating the camera module 213 remotely. The storage means includes a memory 211.

The output means includes display unit 217 for displaying status information and menus for remote control operations, and the audio processing unit 207 for outputting audio data outside the camera phone 210. That is, the output means is responsible for displaying the application data received through the input means or stored in the storage means in accordance with a user instruction.

The communication means includes the RF unit 203, which comprises a radio frequency transmitter and a radio frequency receiver, both of which are coupled to an antenna for transmitting and receiving radio signals through air channel.

The RF unit 203 can support various types of communication services such as cellular or other wireless communications. The RF unit 203 includes an RF transmitter for up-converting and amplifying a signal to be transmitted and an RF receiver for low-noise-amplifying and down-converting a received signal.

The data processing unit 205 includes a means for encoding and modulating the signal to be transmitted through the RF unit 203 and a means for demodulating and decoding the signal received through the RF unit 203.

The audio processing unit 207 processes an audio signal from the data processing unit 205 so as to be outputted through a speaker (spk), and transfers an audio signal input through a microphone (mic) to the data processing unit 205.

The keypad 209 includes a plurality of keys, such as alphanumeric keys, for enabling the user to input data and various function keys for allowing the user to input commands for operating corresponding functions. The keypad 209 allows the user to configure parameters for remotely controlling the camera module 213 and inputting data to be utilized for remote control operations.

The memory 211 includes program memory and data memory. The program memory stores programs for controlling the general operation of the camera phone 210, application programs for remotely controlling the camera module 213, and configuration parameters, settings, and voice messages related to the remote control application programs. The memory 211 also stores the images captured by the camera module 213.

The data memory temporarily stores the data generated during operation of the programs and a database for arranging the data, for example, in tabular form.

The application program for remotely controlling the camera module 213 of the camera phone 210 includes a connection establishment module for controlling the connection between the camera phone 210 and the remote control module 230 in response to a user request, a control signal analysis module for analyzing the control signal received from the remote control module 230, a control module for controlling the camera module 213 according to the control signal analyzed by the control signal analysis module, an information extraction module for extracting information on the operations of the camera module 213, a voice message generation module for generating a voice message corresponding to the operation of the camera module 213, and a transmission module for transmitting the voice message generated by the voice message generation module to the remote control module 230.In an exemplary implementation, the program modules of the application program are stored in the form of the flash files.

The camera module 213 takes a picture and converts the analog picture signals into digital signals in interoperation with an encoder (not shown).

The video processing unit 215 converts digital signals from the camera into video image signals such that the video image signal is processed to be appropriate for the display unit 217.

The display unit 217 presents the video data output from the video processing unit 215. The display unit 217 also presents application data, such as the picture taken by the camera module 213 and the menu screen image and notification message related to the operations for remotely controlling the camera module 213 under control of the controller 201.

The controller 201 controls the overall operation of the camera phone 210, that is, the cooperation of the data processing unit 205, keypad 209, memory 211, camera module 213, video processing unit 215, voice message generator 219, and wireless communication module 221.

In addition, the controller 201 receives control signals transmitted by the remote control module 230 through the wireless communication module 221, extracts an instruction for controlling the camera module 213, and controls the camera module 213 according to the extracted instruction. In addition, the controller 201 controls the voice message generator 219 to generate a voice message corresponding to the operation performed by the camera module 213 and transmits the voice message to the remote control module 230 through the wireless communication module 221.

The voice message generator 219 detects the operation of the camera module 213 and generates a voice message corresponding to the operation of the camera module 213.

For example, while searching a camera operation menu, the voice message generator 219 monitors the selection of a menu item. If a menu item is selected by user manipulation of the remote control module 230, the voice message generator retrieves a text message corresponding to the selected menu item and converts the text message into a voice message. In order to convert the text message to the voice message, the voice message generator 219 is preferably implemented with a Text To Speech (TTS) function.

The wireless communication module 221 provides a wireless interface between the camera phone 210 and the remote control module 230 for exchanging control signals and voice messages. The wireless communication module 221 receives the control signals for controlling operations of the camera module 213 and transfers the control signals to the controller 201. In addition, the wireless communication module 221 is provided with a function to analyze the control signal. The wireless communication module 221 also transmits a voice message generated by the voice message generator 219 to the remote control module 230 under the control of the controller 201.

The remote control module 230 communicates with the camera phone 210 through the wireless communication module 221. The remote control module 230 includes at least one manipulation button such that the control module 230 generates a control signal and transmits the signal to the camera phone 210 in accordance with the user's manipulation of the manipulation button. The remote control module 230 receives the voice message transmitted from the camera phone 210 through the wireless communication module 221 and outputs the voice message to notify the user of the operation of the camera module 213.

In an exemplary implementation, the camera phone 210 and the remote control module 230 exchange signals in accordance with a wireless standard, such as Bluetooth communication. However, the present invention is not limited to the Bluetooth communication, and can be implemented with other personal area network (PAN) technologies such as infrared, ZigBee, and the like.

In this exemplary embodiment the communication between the camera phone 210 and the remote control module 230 is performed through a wireless channel, however the communication channel can be implemented using a wired link. For example, the remote control unit can be an earphone set connected to the camera phone by means of a cord.

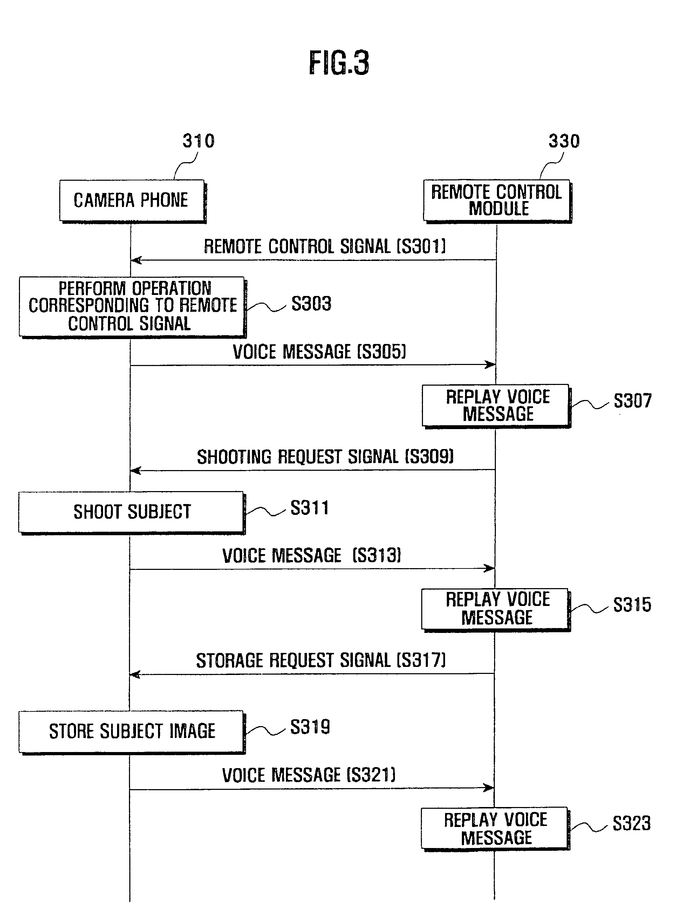

FIG. 3 is a message flow diagram illustrating a remote control method for a camera phone according to an exemplary embodiment of the present invention.

In an exemplary implementation, before establishing a connection between the camera phone 310 and a remote control module 330, an authentication procedure is performed. The authentication procedure can be operated by the camera phone 310 or the remote control module 330.

Referring to FIG. 3, after a wireless channel is established between the camera phone 310 and the remote control module 330, the remote control module 330 transmits a remote control signal to the camera phone 310, step S301. The remote control signal can comprise, for example, a camera activation request signal for activating the camera function, a preview mode request signal for preparing for an image to be taken, and a menu request signal for exploring menus for operating the camera module.

Upon receiving the remote control signal, the camera phone 310 extracts an instruction from the received remote control signal and performs an operation corresponding to the extraction instruction, step S303. For example, if the remote control signal is the camera activation request signal, the camera phone activates the camera module. If the remote control signal is the menu request signal, the camera phone presents the camera operation menus.

After performing the operation corresponding to the remote control signal, the camera phone 310 generates a voice message corresponding to the operation taken by the camera phone and transmits the voice message to the remote control module 330, step S305.

Upon receiving the voice message, the remote control module 330 replays the voice message for notifying the user of the operation taken by the camera phone 310, step S307.

After replaying the voice message, the remote control module 330 transmits a shooting request signal generated by the user's manipulation of the camera phone 310, step S309.

Upon receiving the shooting request signal, the camera phone operates the camera module to shoot a subject in accordance with the shooting request signal, step S311.

After shooting the subject, the camera phone 310 generates a voice message to notify the user of completion of the shooting and transmits the voice message to the remote control module 330, step S313.

Upon receiving the voice message informing the user of completion of shooting, the remote control module 330 replays the voice message to notify the user of completion of the shooing, step S315. After replaying the voice message, the remote control module 310 generates a storage request signal according to the user's manipulation and transmits the storage request signal to the camera phone 310, step S317.

Upon receiving the storage request signal, the camera phone 310 stores the subject image taken by the camera module, step S319.

After storing the subject image taken by the camera module, the camera phone 310 generates a voice message informing the user of completion of the storage of the subject image and transmits the voice message to the remote control module 330, step 321.

Upon receiving the voice message, the remote control module 330 replays the voice message for confirming the storage of the subject image to the user, step S323.

In an exemplary implementation, the remote control method for the camera phone can include a camera mode termination procedure. In a camera mode termination procedure, the remote control module 330 transmits a camera mode termination request signal according to the user's manipulation. Upon receiving the camera mode termination request signal, the camera phone 310 disables the camera module. After disabling the camera module, the camera phone generates a voice message informing the user of the termination of the camera mode and transmits the voice message to the remote control module 310. Upon receiving the voice message, the remote control module 330 replays the voice message notifying the user of the termination of the camera mode.

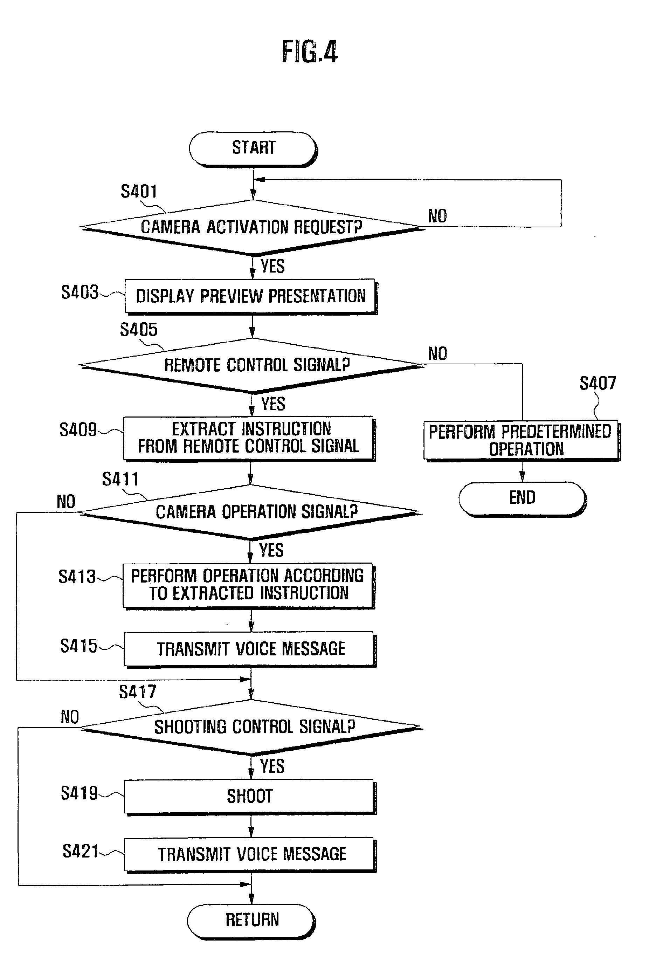

FIG. 4 is a flowchart illustrating a remote control method for a camera phone according to an exemplary embodiment of the present invention.

Referring to FIG. 4, the camera phone determines whether a camera activation request is received, step S401. If a camera activation request is received, the camera phone activates a camera function and provides a preview presentation on a display, step S403.

While showing the preview presentation, the camera phone determines whether a remote control signal is received from a remote control module through a wireless interface, step S405.

If no remote control signal is received within a certain time, the camera phone performs a predetermined operation, step S407. If a remote control signal is received, the camera phone extracts an instruction from the remote control signal, step S409, and determines whether the instruction is for operating the camera module, step S411.

If the instruction is for operating the camera module, the camera module executes the instruction so as to perform an operation according to the instruction, step S413. After performing the operation corresponding to the instruction, the camera phone generates a voice message corresponding to the operation performed by the camera module and transmits the voice message to the remote control module, step S415.

In an exemplary implementation, the camera phone has a TTS function such that the camera phone retrieves a text message corresponding to the operation and converts the text message into the voice message.

Next, the camera phone determines whether a shooting control signal is received from the remote control module, step S417.

If a shooting control signal is received from the remote control module, the camera phone shoots a subject presented on the preview screen, step S419. After shooting the subject, the camera phone generates a voice message for confirming the picture taken by the camera module and transmits a voice message to the remote control module, step S421.

If the voice message is received, the remote control module replays the voice message to notify the user of the operation taken by the camera module.

Certain exemplary embodiments of the present invention can also be embodied as computer-readable codes on a computer-readable recording medium. The computer-readable recording medium is any data storage device that can store data which can thereafter be read by a computer system. Examples of the computer-readable recording medium include, but are not limited to, read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion. Also, functional programs, codes, and code segments for accomplishing the present invention can be easily construed as within the scope of the invention by programmers skilled in the art to which the present invention pertains.

While exemplary embodiments of the present invention have been particularly shown and described with reference to certain exemplary embodiments thereof, it will be understood by those of ordinary skill in the art that various changes in form and detail may be made therein without departing from the spirit and scope of the present invention as defined by the following claims and equivalents thereto.

As described above, the remote control system for a portable device according to exemplary embodiments of the present invention is implemented with a remote control module that is connected to the portable device through a Bluetooth channel, whereby it is possible to remotely control the portable device.

In addition, in an exemplary implementation, the remote control system for a portable device provides voice notification on an operation of a camera function, whereby the user can be remotely notified of the operation status of the portable device, particularly of the operation of the camera module combined with the portable device, resulting in improvement of user convenience.

## Claims

1. A method for controlling a portable device, comprising:
transmitting a control signal from a remote controller to a portable device;
extracting, at the portable device, an instruction from the control signal for controlling the portable device;
generating a voice message corresponding to an operation specified by the instruction; and
transmitting the voice message from the portable device to the remote controller.

2. The method of claim 1, wherein the remote controller is connected to the portable device through a wired or wireless channel.

3. The method of claim 2, wherein the wireless channel comprises at least one of Bluetooth, Infrared, and ZigBee channels.

4. The method of claim 1, wherein the instruction comprises at least one of an activation request signal for activating a camera coupled to the portable device, a menu request signal for exploring menus for operating the portable device, and a voice message generation request signal for providing the voice message associated with the operation of the portable device.

5. The method of claim 1, wherein the generating of a voice message comprises:
retrieving a text message previously mapped to an operation of the portable device;
converting the text message into the voice message by a text-to-speech function.

6. A system for remotely controlling a camera, the system comprising:
a portable device coupled with a camera, the portable device performing an operation of the camera according to a control signal and generating a voice message for notifying the operation; and
a remote controller for generating and transmitting the control signal to the portable device, and receiving and replaying the voice message.

7. The system of claim 6, wherein the remote controller comprises a wired or wireless connection interface for transmitting the control signal and receiving the voice message.

8. The system of claim 6, wherein the remote controller communicates with the portable device through a personal area network, the personal area network comprising one of a wireless format such as Bluetooth, Infrared, and ZigBee.

9. The system of claim 6, wherein the remote controller comprises at least one button for generating the control signal.

10. The system of claim 6, wherein the portable device comprises a voice message generator for retrieving a text message corresponding to the operation of the camera and converting the text message into a voice message.

11. The system of claim 6, wherein the portable device comprises:
a memory for storing image data taken by the camera, an application program for operating the camera, parameters and settings related to the application program, and a text message for generating the voice messages;
a voice message generator for generating the voice message by converting the text message into the voice message;
a wireless communication module for providing a wireless interface between the portable device and the remote controller; and
a controller for controlling operations of the portable device and cooperation of the camera, the memory, the voice message generator, and the wireless communication module.

12. The system of claim 11, wherein the application program for operating the camera comprises:
a connection establishment module for controlling the connection between the portable device and the remote controller;
a control signal analysis module for analyzing the control signal received from the remote controller;
a control module for controlling the camera according to the control signal analyzed by the control signal analysis module;
an information extraction module for extracting information on the operation of the camera;
a voice message generation module for generating a voice message corresponding to the operation of the camera; and
a transmission module for transmitting the voice message generated by the voice message generation module to the remote controller.

13. The system of claim 11, wherein the voice message generator extracts a text message mapped to an operation of the camera and converts the text message to the voice message.

14. The system of claim 11, wherein the voice message generator comprises a text-to-speech converter for converting the text message to the voice message.

15. The system of claim 11, wherein the wireless communication module receives the control signal from the remote controller and transmits the control signal to the controller.

16. The system of claim 11, wherein the controller analyzes the control signal received through the wireless control module and performs an operation corresponding to the control signal, and controls the voice message generator to generate the voice message corresponding to the operation and to transmit the voice message to the remote controller.

17. The system of claim 6, wherein the portable device comprises a keypad having a plurality of keys for facilitating alphanumeric input, and various function keys for facilitating input commands for operations corresponding to functions.

18. The system of claim 6, wherein the portable terminal presents pictures taken by the camera and menu screen images and notification messages related to the operation for remotely controlling the camera under control of the controller.

19. The method of claim 1, further comprising replaying, at the remote controller, the voice message.

20. A computer-readable medium having stored thereon instructions for controlling a portable device, the instructions comprising:
a first set of instructions for receiving a control signal from a remote controller;
a second set of instructions for extracting, at the portable device, an instruction from the control signal for controlling the portable device;
a third set of instructions for generating a voice message corresponding to an operation specified by the instruction; and
a fourth set of instructions for transmitting the voice message from the portable device to the remote controller.

21. The instructions of claim 22, wherein the third set of instructions for generating a voice message comprises:
a set of instructions for retrieving a text message previously mapped to an operation of the camera portable device;
a set of instructions for converting the text message into the voice message by a text-to-speech function.
